# EUROPEAN PATENT SPECIFICATION

(11) **EP 3 775 018 B1**
(45) Date of publication and mention of the grant of the patent: **26.01.2022**
(21) Application number: 19713524.7
(22) Date of filing: 02.04.2019
(51) Int. Cl.: C08K 5/1545, C08K 5/098, C08K 3/22, C08L 23/10, C08J 5/18

(54) **POLYPROPYLENE COMPOSITION FOR USE IN BOPP APPLICATION, A PROCESS FOR PREPARING BOPP FILMS AND SAID BOPP FILM**
POLYPROPYLENZUSAMMENSETZUNG ZUR VERWENDUNG IN BOPP-ANWENDUNG, VERFAHREN ZUR HERSTELLUNG VON BOPP-FOLIEN UND BOPP-FOLIE
COMPOSITION DE POLYPROPYLÈNE DESTINÉE À ÊTRE UTILISÉE DANS UNE APPLICATION BOPP, PROCÉDÉ DE PRÉPARATION DE FILMS BOPP ET LEDIT FILM BOPP

(30) Priority: 09.04.2018 EP 18166367
(43) Date of publication of application: 17.02.2021
(73) Proprietor: SABIC Global Technologies B.V., 4612 PX Bergen op Zoom (NL)
(72) Inventor: VAN MIERLOO, Sarah, 6160 GA GELEEN (NL); VOETS, Patrick, 6160 GA GELEEN (NL); JONGERIUS, Daan, 6160 GA GELEEN (NL)
(74) Representative: Sabic Intellectual Property Group
(86) International application number: PCT/EP2019/058319
(87) International publication number: WO 2019/197225

(56) References cited:
- EP-A1- 2 433 982
- US-A1- 2010 081 741
- US-A1- 2016 311 988

## Description

### TECHNICAL FIELD

The present invention relates to the polypropylene compositions for use in BOPP applications. More specifically, the invention relates to a composition comprising a propylene homopolymer or propylene-ethylene copolymer, a first additive, being a tocopherol or tocotrienol and a second additive, being an inorganic acid scavenger. Moreover, the invention relates to a biaxially oriented polypropylene (BOPP) film; to a process for the preparation of a biaxially oriented polypropylene (BOPP) film and to the use of the composition according to the invention for the preparation of an article, preferably a BOPP film.

### BACKGROUND

For many applications, biaxially oriented polymer films are required. Biaxially oriented polymer films are usually prepared from reheating an unoriented polymer film to a temperature at which the crystals are partially melted and subsequently stretching it into the desired shape. The stretched film is cooled, which reforms the crystals and thereby locking the orientation into place. The properties of biaxially oriented polymer film are highly dependent on the orientation of the polymer chains.

For many biaxially oriented polymer film applications, polypropylene is the material of choice. The polypropylene chosen for such process has to meet the properties required in the end product (the biaxially oriented polypropylene film) as well as the properties required for manufacturing the film and during the stretching process. BOPP films are also known as oriented polypropylene films, and are used in a wide variety of applications, such as packaging and capacitor films.

BOPP films may be produced through a simultaneous or sequential biaxial stretching process, in which films are cold drawn in two consecutive steps at different temperatures. However, a commercial one step biaxial stretching technique also exists, which allows the production of uniform and highly oriented films at high speed while minimizing energy and production line breaks occurring during deformation. The trend towards using the faster production lines makes it necessary to develop new polymeric compositions that resist the stress encountered during processing without loss of mechanical and optical properties. Depending on the end-use, polypropylene intended for the production of BOPP films, the so-called BOPP grades, therefore has to meet some important challenges.

CN101597401 discloses a BOPP grade having high permeability, high rigidity (stiffness), excellent transparency and gloss for cigarette packaging film without affecting the processing performance is obtained by including a nucleating agent consisting of 2,2-methylene-bis(4,6-di-t-butyl phenoxy) phosphate.

For BOPP grades, a good processability is important as well as good aesthetic performance, especially for the many packaging applications.

There is also an increasing demand for increasingly pure BOPP grades comprising a reduced stabilizer concentration or antioxidants which are bio-inspired. For the purpose of the invention, bio-inspired is meant synthetically produced mimicking a natural source or obtained from a natural source.

### SUMMARY

The object of the present invention is to provide a novel composition for use in BOPP applications that comprises less additives and/or more bio-inspired (or bio-similar) additives and that has a good processability and good aesthetic performance. More specifically, it is an object to provide a composition for use in BOPP applications that does not comprise a phosphorus-containing component. It is a further objection to provide a composition that allows the formation of BOPP films that have good aesthetic performance in view of yellowing but at the same time having good processability, e.g. for packaging applications during post-processing steps, such as metallization. Phenolic antioxidants are often used as primary antioxidants in combination with secondary antioxidants, such as phosphites, and an acid scavenger. There is a continuous need to provide improved packaging material without potentially toxic or at least concerning substances, by-products or degradation products that might diffuse into the surrounding medium, while at the same time these packaging materials must fulfill all requirements related to processing and post-processing.

One or more of these objects are achieved by a first aspect, being a composition comprising:
a) a propylene homopolymer or propylene-ethylene copolymer having an ethylene content of at most 4 wt.%, preferably at most 1.5 wt.% based on the weight of the propylene-ethylene copolymer, said propylene homopolymer or propylene-ethylene copolymer having:
   - a Mw/Mn in the range of 4.0 to 12, wherein Mw stands for the weight average molecular weight and Mn stands for the number average molecular weight and wherein Mw and Mn are measured according to ASTM D6474-12;
   - an XS in the range from 1.0 to 8.0 wt.%, wherein XS stands for the amount of xylene solubles which are measured according to ASTM D 5492-10;
   - a melt flow rate in the range of 1 to 10 dg/min as measured according to ISO1133-1 (2011) (2.16 kg/230 °C);
b) a first additive, being a tocopherol according to Formula A below: 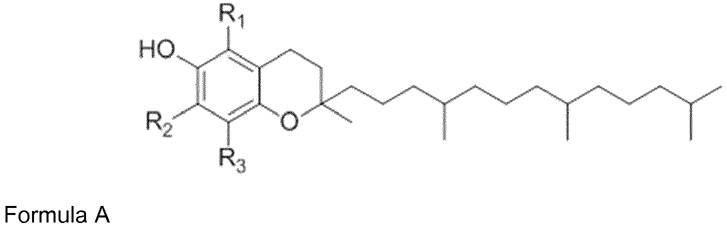 wherein R₁, R₂, and R₃ are each independently either a hydrogen (H) or a methyl (CH₃); or a tocotrienol according to Formula B below: 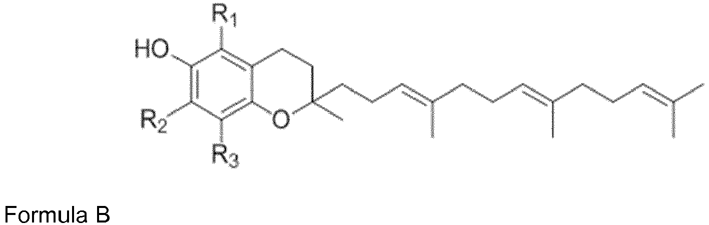 wherein R₁, R₂, and R₃ are each independently either a hydrogen (H) or a methyl (CH3);
c) a second additive, being an inorganic acid scavenger, being a metal oxide.

A second aspect relates to a biaxially oriented polypropylene (BOPP) film comprising the composition according to the first aspect. In an embodiment, the second aspect relates to a biaxially oriented polypropylene (BOPP) film consisting of the composition according to the first aspect.

A third aspect relates to a process for the preparation of a biaxially oriented polypropylene (BOPP) film according to the second aspect, said process comprising the steps of: (a) providing the composition according to the first aspect; (b) extruding the composition provided in step a) into a sheet; and (c) stretching the sheet of step b) in a machine direction (MD) and a transverse direction (TD) to obtain a biaxially oriented polypropylene film.

A fourth aspect relates to the use of the composition according to the first aspect for the preparation of an article, preferably a BOPP film.

Embodiments of each of these aspects will be discussed below. Embodiments discussed for one aspect, may also be applicable to the other aspects.

### BRIEF DESCRIPTION OF DRAWINGS

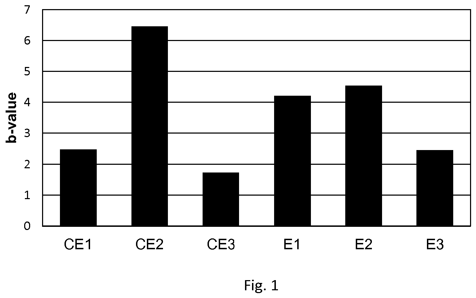

Figure 1 is a graph showing the color data after compounding showing the influence of acid scavenger type.

### DESCRIPTION OF EMBODIMENTS

As discussed above, a first aspect relates to a composition comprising a) propylene homopolymer and/or propylene-ethylene copolymer; b) a first additive, and c) a second additive. Each of which will be discussed in more detail below.

### Propylene homopolymer or propylene-ethylene copolymer

Several embodiments for the propylene homopolymer or propylene-ethylene copolymer forming a) of the composition are discussed below.

The propylene homopolymer or propylene-ethylene copolymer has an ethylene content of at most 4 wt.%, preferably at most 1.5 wt% based on the weight of the propylene-ethylene copolymer. The ethylene content in the propylene-ethylene copolymer is relatively low, preferably being at most 1.5 wt % based on the propylene-ethylene copolymer. For example the ethylene content is at least 0.1 wt%, for example at least 0.2 wt%, for example at least 0.3 wt%, for example at least 0.4 wt%, for example at least 0.5 wt% and/or for example at most 1.5 wt%, for example at most 1.2 wt% based on the propylene-ethylene copolymer. By using a propylene-ethylene copolymer for the preparation of a BOPP film instead of a propylene homopolymer, processability may be improved. Within the framework of the invention, with propylene-ethylene copolymer is meant a random propylene-ethylene copolymer.

The propylene homopolymer or propylene-ethylene copolymer has a Mw/Mn in the range of 4.0 to 12, wherein Mw stands for the weight average molecular weight and Mn stands for the number average molecular weight and wherein Mw and Mn are measured according to ASTM D6474-12. I, In an embodiment, the propylene homopolymer or propylene-ethylene copolymer has a molecular weight distribution (MWD) of at least 5.0, for example at least 6.0 and/or at most 12, for example at most 9.0, for example the propylene homopolymer or propylene-ethylene copolymer according to the invention has a molecular weight distribution in the range from 6.0 to 9.0. The effect of this is that this will allow the film to have less gauge variation, in other words, to be able to prepare a film having a uniform thickness and/or with an acceptable high speed processing behavior.

In an embodiment, the propylene homopolymer or propylene-ethylene copolymer has a Mw of at least 400 kg/mol. In an embodiment, the propylene homopolymer or propylene-ethylene copolymer has a Mw of at least 450 kg/mol. In an embodiment, the propylene homopolymer or propylene-ethylene copolymer has a Mw of at most 600 kg/mol. The effect of this is that high speed processing behavior is optimal in the preparation of a BOPP film.

The propylene homopolymer or propylene-ethylene copolymer has an XS in the range from 1.0 to 8.0 wt%, wherein XS stands for the amount of xylene solubles which are measured according to ASTM D 5492-10. In an embodiment, said propylene homopolymer or propylene-ethylene copolymer has an XS in the range from 1.0 to 5.0 wt%. In an embodiment, the propylene homopolymer or propylene-ethylene copolymer has an XS of at most 7 wt.%, preferably at most 6 wt.%, more preferably at most 5.0 wt.%, such as at most 4.5 wt%, preferably at most 4.0 wt%, for example at most 3.5 wt%, for example at most 3.0 wt% and/or preferably at least 1.0 wt%, for example at least 1.5 wt% based on the propylene homopolymer or propylene-ethylene copolymer. The effect of this is to obtain a good high speed processing for the preparation of a BOPP film.

The propylene homopolymer or propylene-ethylene copolymer has a melt flow rate in the range of 1 to 10 dg/min or 2 to 8 dg/min as measured according to ISO1133-1 (2011) (2.16 kg/230 °C). In an embodiment, the propylene homopolymer or propylene-ethylene copolymer has a melt flow rate in the range of 2 to 6 dg/min as measured using to ISO1133-1 (2011) (2.16 kg/230 °C).

In an embodiment, the propylene homopolymer or propylene-ethylene copolymer has an isotacticity of at most 98 wt%, for example at most 97 wt%, for example at most 96 wt%, for example at most 95 wt%, for example at most 94 wt%, for example at most 93 wt%, based on the propylene homopolymer or propylene-ethylene copolymer, wherein the isotacticity is determined using 13C NMR. In an embodiment, the propylene homopolymer or propylene-ethylene copolymer has an isotacticity of at least 90 wt% based on the propylene homopolymer or propylene-ethylene copolymer, wherein the isotacticity is determined using 13C NMR. A lower isotacticity allows for a good stretchability of the BOPP film.

In an embodiment, the propylene homopolymer or propylene-ethylene copolymer are essentially phthalate-free. In the present description "essentially phthalate-free" means the presence of less than 0.0001wt% of one or more phthalates based on the propylene homopolymer and/or propylene-ethylene copolymer, preferably 0.000001 wt% of phthalates based on the propylene homopolymer and/or propylene-ethylene copolymer.

The person skilled in the art is aware how to prepare a propylene homopolymer or propylene-ethylene copolymer. The preparation of propylene homopolymers and propylene-ethylene copolymers is, for example, described in Moore, E. P. (1996) Polypropylene Handbook. Polymerization, Characterization, Properties, Processing, Applications, Hanser Publishers: New York.

Polypropylene homopolymers and propylene-ethylene copolymers can be made by any known polymerization technique as well as with any known polymerization catalyst system. Regarding the techniques, reference can be given to slurry, solution or gas phase polymerizations; regarding the catalyst system reference can be given to Ziegler-Natta, metallocene or single-site catalyst systems. All are, in themselves, known in the art.

### First additive

The first additive in the composition is either a tocopherol or a toootrienol or a combination of one or more thereof. The first additive may be a mixture of one or more tocopherols and one or more tocotrienols. Both tocopherol and tocotrienol are constituents of vitamin E synthetically produced or obtained from a natural source.

The tocopherol used in the present composition is according to Formula A: 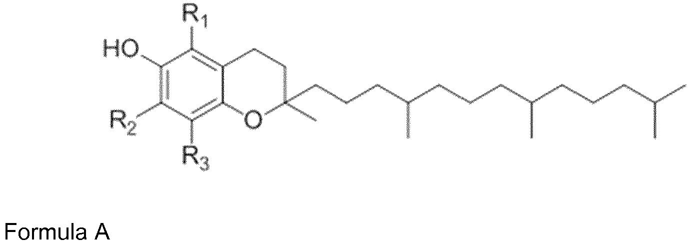 wherein R₁, R₂, and R₃ are each independently either a hydrogen (H) or a methyl (CH₃).

Examples that are suitable as first additives according to the present invention are alpha (a)-tocopherol according to Formula A wherein R₁, R₂, and R₃ are each CH₃; beta (β)-tocopherol according to Formula A wherein R₁ and R₃ are each CH₃ and wherein R₂ is H; gamma(γ)-tocopherol according to Formula A wherein R₂ and R₃ are each CH₃ and R₁ is H; and delta(δ)-tocopherol according to Formula A wherein R₁ and R₂ are each H, and R₃ is CH₃. These structures are shown below:

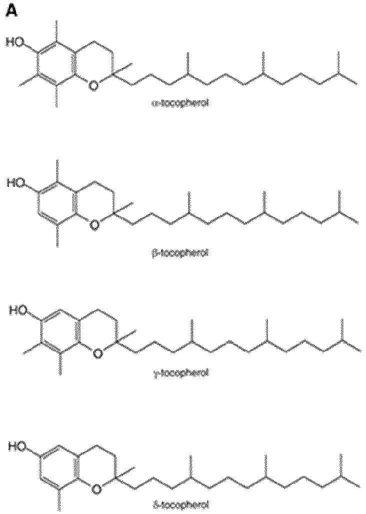

Tocopherol according to Formula A comprises one or more of its stereoisomer forms for all three chiral centers (RRR, SSS, RRS, RSR, SSR, SRS, SRR, RSS). In an embodiment, the stereoisomer shown below is used wherein R₁, R₂, and R₃ are each independently either a hydrogen (H) or a methyl (CH₃):

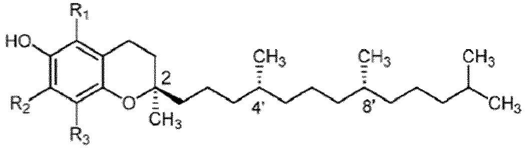

The tocotrienol used in the present composition is according to Formula B: 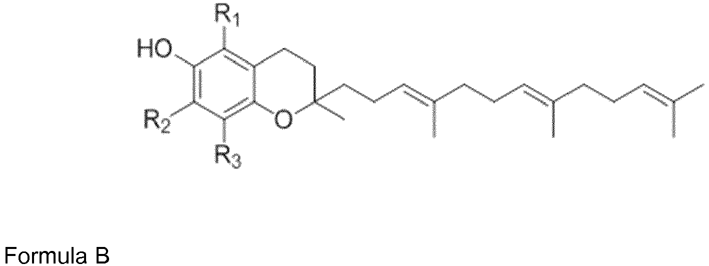 wherein R₁, R₂, and R₃ are each independently either a hydrogen (H) or a methyl (CH₃).

Examples that are suitable as antioxidants according to the present invention are alpha(α)-tocotrienol according to Formula B wherein R₁, R₂, and R₃ are each CH₃; beta(β)- tocotrienol according to Formula B wherein R₁ and R₃ are each CH₃ and wherein R₂ is H; gamma(γ)-tocotrienol according to Formula B wherein R₂ and R₃ are each CH₃ and R₁ is H; and delta(δ)- tocotrienol according to Formula B wherein R₁ and R₂ are each H, and R₃ is CH₃. These structures are shown below:

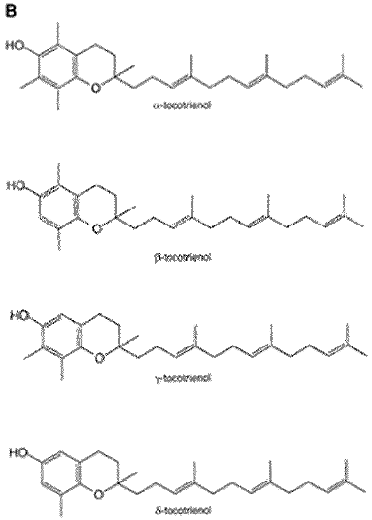

Tocotrienol according to Formula B comprises one or more of its stereoisomer forms (RS, RR, SS). In an embodiment, the stereoisomer shown below is used wherein R₁, R₂, and R₃ are each independently either a hydrogen (H) or a methyl (CH₃):

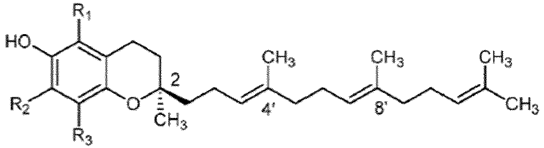

A mixture or combination of one or more of these compounds and their stereoisomers may also be used, such as bio-inspired or vitamin E synthetically produced or obtained from a natural source.

In an embodiment, as a first additive D,L-α- tocopherol is used which is a racemic mixture of equal amounts of all eight possible stereoisomers of α-tocopherol (RRR, SSS, RRS, RSR, SSR, SRS, SRR, RSS) and is also referred to as all-*rac*-alpha-tocopherol. α-tocopherol and/or synthetic α-tocopherol according to the invention may be used, for example in the form of Irganox E 201 (supplied by BASF) which is a D,L-α-tocopherol or all-*rac*-alpha-tocopherol. The compounds forming this mixture may be synthetically produced.

In an embodiment, the amount of first additive in the composition is between 25 and 2000 ppm. In an embodiment, the amount of first additive in the composition is between 50 and 1000 ppm. In an embodiment, the amount of first additive in the composition is between 50 and 500 ppm. In an embodiment, the amount of first additive in the composition is between 50 and 250 ppm. In an embodiment, the amount of first additive in the composition is between 50 and 200 ppm.

In an embodiment, the tocopherol(s) and/or tocotrienol(s) are used in the form of a liquid. In an embodiment, the tocopherol(s) and/or tocotrienol(s) are used in the form of a masterbatch, viz. a mixture of a polymer and a certain amount of the tocopherol(s) and/or tocotrienol(s).

In an embodiment, the tocopherol(s) and/or tocotrienol(s), e.g. D,L-alpha-tocopherol, may be added as a masterbatch comprising between 0.5 and 10 wt.%, such as between 0.5 and 10 wt.%, preferably between 1 and 5 wt.% of the tocopherol(s) and/or tocotrienol(s) based on the weight of the masterbatch.

The rest of the master batch up to 100 w.-% is a polyolefin, preferably a polypropylene homopolymer. However, a low density polyethylene LDPE may also be used. It should be noted that the polyolefin of the masterbatch is not considered to be part of the total amount of additives.

### Second additive

The second additive in the composition is an inorganic acid scavenger, being a metal oxide.

Preferably, the inorganic acid scavenger is zinc oxide. Not according to the invention are hydrocalumites and/or hydrotalcites (such as DHT-4A, DHT-4C and DHT-4V of Kyowa Chemical Industry Co., Ltd. and Hysafe 539 and Hysafe 530 of J. M. Huber Corporation) because these provide less than optimal aesthetic properties due to yellowing.

In an embodiment, the amount of inorganic acid scavenger in the composition is between 100 and 5000 ppm. In an embodiment, the amount of inorganic acid scavenger in the composition is between 200 and 1000 ppm. In an embodiment, the amount of inorganic acid scavenger in the composition is between 100 and 600 ppm, such as approximately 300 ppm.

### Composition

In an embodiment, the total amount of additives in the composition is at most 1000 ppm. With the "total amount of additives" in the composition is meant the combined amount of the first additive (antioxidant), the second additive (acid scavenger) and optionally the one or more additional additives. However, polymer or other carrier components from for example a masterbatch are not considered as an additive but as polymer / carrier components.

In an embodiment, the composition according further comprises an organic acid scavenger. In an specific embodiment, said organic acid scavenger is calcium stearate, zinc stearate or magnesium stearate. In an specific embodiment, said organic acid scavenger is calcium stearate.

In an embodiment, the composition does not comprise a phosphorus-containing compound.

In an embodiment of the second aspect, said composition has a CIELAB b-value of at most 5.0, for example at most 4.0.

The BOPP composition may contain one or more additional additives, such as antioxidants. The BOPP composition preferably comprises no other polymer than the propylene homopolymer and/or propylene-ethylene copolymer of the invention (with the exception of any polymer or carriers used in any masterbatches). Thus the remaining part (in addition to the components a), b) and c)) up to 100 wt.% may be supplemented by additives known to the person skilled in the art. In other words, the compositions may consist of a) propylene homopolymer and/or propylene-ethylene copolymer; b) a first additive, and c) a second additive and optionally additional additives.

In an embodiment, the composition does not contain any polyphenolic and/or sterically hindered phenolic antioxidants, such as tetrakis[methylene-3-(3',5')-di-t-butyl-4-hydroxyphenyl)propionate] methane; 1,1,3-tris(2-methyl-4-hydroxy-5-t-butylphenyl)butane; 1,3,5-trimethyl-2,4,6-tris(3,5-di-t-butyl-4-hydroxybenzyl)benzene; bis[3,3-bis-(4'-hydroxy-3'-t-butylphenyl butanoic acid]-glycol ester; tris(3,5-di-t-butyl-4-hydroxy benzyl)isocyanurate; 1,3,5-tris(4-t-butyl-2,6-dimethyl-3-hydroxy-benzyl)isocyanurate; 5-dit-butyl-4-hydroxy hydrocinnamic acid triester with 1,3,5-tris(2-hydroxyethyl)-s-triazine-2,4,6(1H, 3H, 5H)trione; p-cresol/dicyclopentadiene butylated reaction product and 2,6-bis(2'-bis-hydroxy-3'-t-butyl-5'-methyl-phenyl-4-methyl-phenol). It should be noted that the tocophenol(s) and/or tocotrienol(s) according to the invention are according to the present description not considered to be polyphenolic and/or sterically hindered phenolic antioxidants.

In an embodiment, the composition does not contain any organic phosphites and phosphonites. Examples of organic phosphites and phosphonites are triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphate, bis(2,6-di-tert-butyl-4-methylphenyl) pentaerythritol diphosphate, bisisodecyloxy-pentaerythritol diphosphite, bis(2,4-di-tert-butyl- 6-methylphenyl) pentaerythritol diphosphite, bis(2,4,6-tri-tert-butylphenyl) pentaerythritol diphosphite, tristearyl sorbitol triphosphite, tetrakis(2,4-di-tert-butylphenyl) 4,4'-biphenylenediphosphonite, 6-isooctyloxy-2,4,8,10-tetra-tert-butyl-12H-dibenzo[d,g]-1,3,2-dioxaphosphocin, 6-fluoro-2,4,8,10-tetra-tert-butyl-12-methyldibenzo[d,g]-1,3,2-dioxaphosphocin, bis(2,4-di-tert-butyl-6-methylphenyl) methyl phosphite, bis(2,4-di-tert-butyl- 6-methylphenyl) ethyl phosphite.

### Film

In an embodiment of the second aspect, the BOPP film comprises at least 80 wt.%, preferably at least 90 wt.%, more preferably at least 95 wt.%, even more preferably at least 96 wt.%, or 97 wt.% or even 98 wt.% of the composition according to the invention based on the weight of said film.

A frequently used method for the evaluation of processing stability is so-called multiple-pass extrusion; involving repeatedly passing the composition through an extruder and collecting samples after each pass. In multiple-pass extrusion experiments color measurements are generally used as one of the possible evaluation methods.

In an embodiment of the second aspect, said film has a thickness of between 5 or 10 and 500 micron and having a draw ratio of at least three (3) times in the machine direction and at least 7 times in the transverse direction (3x7) in simultaneous or sequential mode. The biaxially oriented polypropylene (BOPP) film of the invention may have a draw ratio of at least 3.0 times in machine direction (MD) and/or at least 7.0 times in transverse direction (TD). For example, the biaxially oriented polypropylene (BOPP) film may have a draw ratio in the range from 3.0 to 10.0 times in machine direction and/or for example in the range from 7.0 to 12.0 times in transverse direction.

In an embodiment of the second aspect, said film has a thickness of between 5 and 500 micron. The thickness of such BOPP film may be in the range from 5 to 50 µm, for example in the range of 10 to 45 µm, for example in the range from 12 to 18 µm or for example in the range of 8 to 20 µm.

It has been found that BOPP films prepared from said polypropylene have low yellowing. In addition, the polypropylene of the invention may show one or more of the following advantages: good processing, good film appearance, such as high gloss, low haze and/or low gel count; and/or a uniform film thickness (less gauge variation), less extractables, improved gas fading, less migration (determined by applying modelling software) and/or good organoleptics.

The BOPP film may contain one or more additional additives. The BOPP film preferably comprises no other polymer than the propylene homopolymer and/or propylene-ethylene copolymer of the invention (with the exception of any polymer or carriers used in any masterbatches). Thus the remaining part up to 100wt% may be supplemented by additives known to the person skilled in the art.

### Process

A BOPP film as defined herein is a biaxially oriented film, which is a film that has been obtained by subjecting polypropylene to a stretching process in two directions. The BOPP film can be prepared by conventional stretching (drawing) processes and under conditions known to the person skilled in the art. Conditions for a biaxial (consecutive) stretching process are for example described in WO2015091839, hereby incorporated by reference.

### Use

The polypropylene homopolymer and/or propylene-ethylene copolymer or the composition of the invention may suitably be used for applications, such as for flexible packaging (film (e.g. BOPP film)), for thermoforming or for thin-wall injection molding.

Examples of BOPP film applications include but are not limited to (snack food) wrappings, for example transparent cups, containers, trays or thin wall packaging; packaging tape, electronic components wrapping, cigarette overwrap, dielectrical films for capacitor or metallized films etc.

The present inventors have observed that when using organic acid scavengers in addition to tocopherol/tocotrienol additives for certain applications, post-processing steps such as metallization are not optimal. The present inventors have observed that when using inorganic acid scavengers in addition to tocopherol/tocotrienol additives this processability is improved. However, the present inventors have observed that with certain inorganic acid scavengers, such as DHT-4 which is a hydrotalcite, there is significant yellowing.

In another aspect, the invention relates to an article comprising the propylene homopolymer and/or the propylene-ethylene copolymer of the invention or the composition of the invention or the biaxially oriented polypropylene (BOPP) film of the invention.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. The scope of the present invention is defined by the appended claims. One or more of the objects of the invention are achieved by the appended claims.

### METHODS

The following methods are used in the Examples.

### MWD, Mn, Mw

Mw and Mn were all measured according to ASTM D6474-12 (Standard Test Method for Determining Molecular Weight Distribution and Molecular Weight Averages of Polyolefins by High Temperature Gel Permeation Chromatography). Mw stands for the weight average molecular weight and Mn stands for the number average weight.

### Cold xylene solubles (XS)

XS, wt% is xylene solubles, measured according to ASTM D 5492-10. 1 gram of polymer and 100 ml of xylene are introduced in a glass flask equipped with a magnetic stirrer. The temperature is raised up to the boiling point of the solvent. The so obtained clear solution is then kept under reflux and stirring for further 15 min. Heating is stopped and the isolating plate between heating and flask is removed. Cooling takes places with stirring for 5 min. The closed flask is then kept for 30 min in a thermostatic water bath at 25 °C for 30 min. The so formed solid is filtered on filtering paper. 25 ml of the filtered liquid is poured in a previously weighed aluminum container, which is heated in a stove of 140 °C for at least 2 hours, under nitrogen flow and vacuum, to remove the solvent by evaporation. The container is then kept in an oven at 140 °C under vacuum until constant weight is obtained. The weight percentage of polymer soluble in xylene at room temperature is then calculated.

### Isotacticity

"APP wt%" or "weight percentage of atactic polypropylene" as used in the present description means: the fraction of polypropylene obtained in a slurry polymerization that is retained in the solvent. APP can be determined by taking 100 ml of the filtrate ("y" in millilitres) obtained during separation from polypropylene powder after slurry polymerization ("x" in grammes). The solvent is dried over a steam bath and then under vacuum at 60 °C. That yields APP ("z" in grammes). The total amount of APP ("q" in grammes) is (y/100)*z. The weight percentage of APP is (q/q+x))*100%. The isotacticity is 100wt% - APP (in wt%). The isotacticity was measured using 13C NMR.

### Melt flow rate (MFR)

For purpose of the invention the melt flow rate is the melt flow rate as measured according to ISO1133-1 (2011) (2.16 kg/230 °C).

### Extractable tests

Extractable tests are carried according using following analytical methods: Volatiles were analyzed by TD-GC-MS, which couples thermal desorption (TD), gas chromatography (GC) and mass spectroscopy (MS). Semi-volatiles were analyzed by PTV-GC-MS, which couples programmed temperature vaporization (PTV), GC and MS. Non-volatiles were analyzed by LC-MS, which couples liquid chromatography (LC) and MS.

### Preparation of BOPP films

### Extrusion of PP sheets.

A non-stretching sheet, with a thickness and width of 500 µm and 270 mm respectively, was made by an extrusion line ZE25Ax42D with a discharge amount of 16 kg/hr. The extrusion was carried out at 240 °C and the chill-roll temperature was set to 35 °C. The take-off speed was 2,6 m/min. No draw ratio was subjected on the MDO unit after extrusion. Approximately 10-15 m sheet was winded of each sample that was produced for further stretching trials.

### Stretching using a biaxial stretching machine.

BOPP films were produced on the biaxial stretching machine KARO IV. The biaxial stretching was performed in the sequential or in the simultaneous stretching mode. The stretching temperature was 160 °C. The conditions during the stretching process are summarized below.

Stretching conditions on the KARO IV.

| Sheet Thickness | Sheet dimensions | Stretching oven temp | | Preheat time | Speed MD/TD | Draw ratio | Speed profile |
|---|---|---|---|---|---|---|---|
| [µm] | [µm] | [°C] | | [S] | [%/s] | [MDxTD] | |
| 500 | 90x90 | 160 | | 30 | 400 | 5x10 | SEQ |

The final BOPP film was prepared by stretching the extruded 500 µm sheet 5x10 in sequential mode. This stretching was performed at the temperature T = 160 °C.

### Compounding extrusion

The compounding extrusion was carried out under nitrogen (blanket) . A ZE 25 by Berstorff having a screw design: 36_D-37 is used. As temperature program the following is used: the sample was added at room temperature, then temperature was increased to 190 °C, thereafter to 230 °C. The screw speed was 223 min⁻¹; the throughput: 18 kg/h; the melt temperature (die): +/- 255 °C.

### Color Measurements

Color measurements were done by using a Konica Minolta CM-5, measuring L*, a*, b* values (CIE), using d8 geometry (measurements in reflectance), light source D65 and a 10° viewing angle (specular component excluded). The color measurement is done according to CIELAB (ASTM D6290-05) and ASTM E313. The b-values are disclosed in the Examples below (measurement was carried out three times, average values were displayed).

### EXAMPLES

The present invention is further elucidated based on the Examples.

Three different compositions according to the invention and three different comparative compositions have been prepared and added to a propylene homopolymer having a Mw/Mn of 5.0, having an XS of 2.0, having a MFR of 3.0 g/10 min.

As hydrotalcite a magnesium aluminum hydroxide carbonate is used in the form of DHT-4A^{®} commercially available from Kisuma Chemicals.

D,L-α-tocopherol is used in the form of a masterbatch, commercially available as Irganox^{®} E 201 by BASF (3,4-dihydro-2,5,7,8-tetramethyl-2-(4,8,12-trimethyltridecyl)-2H-1-benzopyran-6-ol) (Masterbatch contains 3% Irganox^{®} E 201 with LDPE carrier). By using 2500 ppm of this masterbatch, the final formulation contains 75 ppm of the tocopherol with 2425 ppm of LDPE having density as determined according to ISO 1183-1 (2012), method A of 920 kg/m3 and an MFI represented by the corresponding melt mass flow rate (MFR) as measured according to ISO 1133-1 (2011) at 190°C and at a load of 2.16 kg of 7.5 dg/min. This LDPE is commercially available from SABIC as 2008N0.
Comparative example 1 (CE1) includes a polyphenolic antioxidant, being Irganox^{®} 1010 (pentaerythritol tetrakis(3-(3,5-di-tert-butyl-4-hydroxyphenyl)propionate)) available from BASF. Comparative example 1 also includes a phosphite antioxidant, being Irgafos^{®} 168 (bis-t-butyl phenyl phosphite) available from BASF. As acid scavenger a hydrotalcite (DHT-4A) is used. This is a comparative example because the antioxidant mixture comprises a phenolic and phosphite antioxidant.
Comparative example 2 (CE2) includes D,L-alpha-tocopherol as antioxidant instead of the mixture of a phenolic and phosphite antioxidant as used in comparative example 1. The same hydrotalcite acid scavenger is used. The effect of the different antioxidant is that there is no phosphite additive present.
Comparative example 3 (CE3) includes D,L-alpha-tocopherol as antioxidant, which is the same as Comparative example 2. The difference is that instead of an inorganic hydrotalcite acid scavenger an organic acid scavenger, calcium stearate is added. The effect of this different acid scavenger is that the yellowing is significantly reduced (see data below).

Examples 1-3 (E1, E2, E3) according to the present invention include D,L-alpha-tocopherol as antioxidant, which is the same as in comparative examples 2 and 3. The difference is that instead of an organic acid scavenger, calcium stearate, an inorganic metal oxide acid scavenger is used. The effect of this different acid scavenger is that this composition has good processability during post-processing steps such as metallization and yet has a yellowing that is still acceptable. There is a good balance between processability and yellowing. The present inventors have observed that hydrotalcite acid scavengers in combination with the tocopherol/tocotrienol type antioxidants show significant yellowing.

The difference between example 1 and 2 is the amount of metal oxide acid scavenger ad the difference between example 1 and 2 on the one hand and example 3 on the other hand is that in example 3, in addition to the inorganic metal oxide acid scavenger also an organic acid scavenger calcium stearate is present.

**Table 1 below shows the additives of the compositions.**

| | **CE1** | **CE2** | **CE3** | **E1** | **E2** | **E3** |
|---|---|---|---|---|---|---|
| Hydrotalcite | 280 | 280 | | | | |
| Polyphenolic antioxidant | 450 | | | | | |
| Phosphite antioxidant | 450 | | | | | |
| D,L-α-tocopherol | | 75 | 75 | 75 | 75 | 75 |
| ZincOxide | | | | 280 | 500 | 150 |
| Calcium Stearate | | | 500 | | | 250 |
| TOTAL | 1180 | 355 | 575 | 355 | 575 | 475 |

Based on appearance evaluation - color assessment - after the compounding, Figure 1 shows color data as CIELAB b-values. From this data it could be concluded that changing from a hydrotalcite inorganic acid scavenger to a metal oxide inorganic acid scavenger will reduce yellowing (lower b-values). An organic acid scavenger will also show reduced yellowing, however for that scavenger the processability, in particular the post-processing steps such as metallization, will be less than optimal.

## Claims

1. Composition comprising:
a) a propylene homopolymer or propylene-ethylene copolymer having an ethylene content of at most 4.0 wt.%, preferably at most 1.5 wt% based on the weight of the propylene-ethylene copolymer, said a propylene homopolymer or propylene-ethylene copolymer having:
- a Mw/Mn in the range of 4.0 to 12, wherein Mw stands for the weight average molecular weight and Mn stands for the number average molecular weight and wherein Mw and Mn are measured according to ASTM D6474-12;
- an XS in the range from 1.0 to 8.0 wt%, wherein XS stands for the amount of xylene solubles which are measured according to ASTM D 5492-10;
- a melt flow rate in the range of 1 to 10 dg/min as measured according to ISO1133-1 (2011) (2.16 kg/230 °C);
b) a first additive, being one or more tocopherols according to Formula A below: 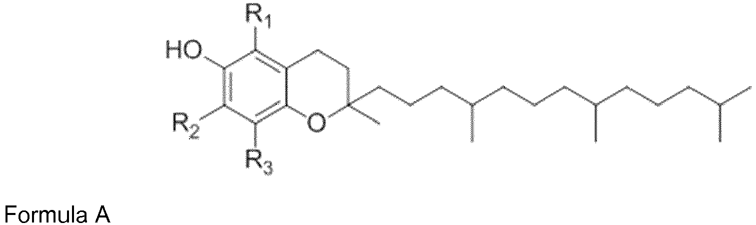 wherein R₁, R₂, and R₃ are each independently either a hydrogen (H) or a methyl (CH₃); and/or one or more tocotrienols according to Formula B below: 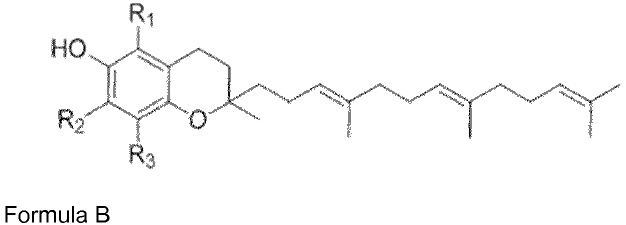 wherein R₁, R₂, and R₃ are each independently either a hydrogen (H) or a methyl (CH3); preferably wherein said first additive is D,L-α-tocopherol
c) a second additive, being an inorganic acid scavenger, being a metal oxide.

2. Composition according to claim 1, wherein said inorganic acid scavenger is zinc oxide.

3. Composition according to claim 1 or 2, wherein the amount of first additive in the composition is between 25 and 2000 ppm, preferably between 50 and 1000 ppm, more preferably between 50 and 500 ppm, even more preferably between 50 and 250 ppm, most preferably between 50 and 200 ppm.

4. Composition according to any one of the preceding claims, wherein the amount of inorganic acid scavenger in the composition is between 100 and 5000 ppm, preferably between 200 and 1000 ppm, more preferably between 100 and 600 ppm.

5. Composition according to any one of the preceding claims, wherein the total amount of additives in the composition is at most 1000 ppm.

6. Composition according to any one of the preceding claims, further comprising an organic acid scavenger, preferably wherein said organic acid scavenger is calcium stearate, zinc stearate or magnesium stearate, preferably calcium stearate.

7. Composition according to any of the preceding claims, wherein the composition does not comprise a phosphorus-containing compound.

8. Composition according to any one of the preceding claims, having a CIELAB b-value of at most 5.0.

9. Composition according to any one of the preceding claims, having a CIELAB b-value of at most 4.0.

10. Composition according to any one of the preceding claims, wherein the propylene homopolymer or propylene-ethylene copolymer has an isotacticity of at most 98 wt% based on the propylene homopolymer or propylene-ethylene copolymer and/or wherein propylene homopolymer or propylene-ethylene copolymer has an isotacticity of at least 90 wt. % based on the propylene homopolymer or propylene-ethylene copolymer, wherein the isotacticity is determined using 13C NMR.

11. Biaxially oriented polypropylene (BOPP) film comprising the composition according to any one of claims 1 -10.

12. Film according to claim 11, having a thickness of between 5 and 500 micron.

13. Film according to claim 12, having a draw ratio of at least 3 times in the machine direction and at least 7 times in the transverse direction (3x7) in simultaneous or sequential mode.

14. Process for the preparation of a biaxially oriented polypropylene (BOPP) film according to any one of claims 11-13, comprising the steps of:
(a) providing the composition according to any one of claims 1-10;
(b) extruding the composition provided in step a) into a sheet;
(c) stretching the sheet of step b) in a machine direction (MD) and a transverse direction (TD) to obtain a biaxially oriented polypropylene film.

15. Use of the composition according to any one of claims 1-10 for the preparation of an article, preferably a BOPP film.

## Patentansprüche

1. Zusammensetzung, umfassend:
a) ein Propylenhomopolymer oder Propylen-Ethylen-Copolymer mit einem Ethylengehalt von höchstens 4,0 Gew.-%, bevorzugt höchstens 1,5 Gew.-%, basierend auf dem Gewicht des Propylen-Ethylen-Copolymers, wobei das Propylenhomopolymer oder Propylen-Ethylen-Copolymer Folgendes hat:
- ein Mw/Mn im Bereich von 4,0 bis 12, wobei Mw für das Gewichtsmittel des Molekulargewichts steht und Mn für das Zahlenmittel des Molekulargewichts steht, und wobei Mw und Mn gemäß ASTM D6474-12 gemessen werden;
- eine XS im Bereich von 1,0 bis 8,0 Gew.-%, wobei XS für die Menge an xylollöslichen Stoffen steht, die gemäß ASTM D 5492-10 gemessen werden;
- eine Schmelzflussrate im Bereich von 1 bis 10 dg/min, gemessen gemäß ISO1133-1 (2011) (2,16 kg/230 °C);
b) ein erstes Additiv, das ein oder mehrere Tocopherole ist, gemäß Formel A unten: 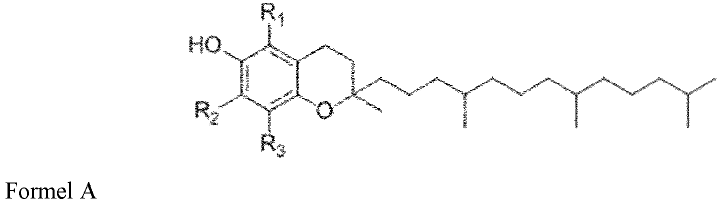
wobei R₁, R₂ und R₃ jeweils unabhängig entweder ein Wasserstoff (H) oder ein Methyl (CH₃) sind; und/oder
ein oder mehrere Tocotrienole gemäß Formel B unten: 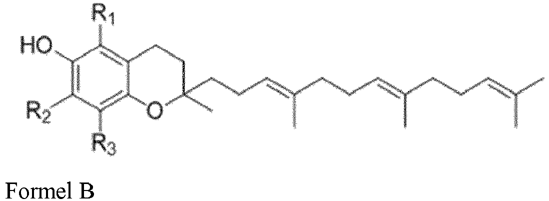
wobei R₁, R₂ und R₃ jeweils unabhängig entweder ein Wasserstoff (H) oder ein Methyl (CH3) sind; wobei bevorzugt das erste Additiv D,L-α-Tocopherol ist
c) ein zweites Additiv, das ein anorganischer Säurefänger ist, das ein Metalloxid ist.

2. Zusammensetzung nach Anspruch 1, wobei der anorganische Säurefänger Zinkoxid ist.

3. Zusammensetzung nach Anspruch 1 oder 2, wobei die Menge von erstem Additiv in der Zusammensetzung zwischen 25 und 2000 ppm ist, bevorzugt zwischen 50 und 1000 ppm, bevorzugter zwischen 50 und 500 ppm, noch bevorzugter zwischen 50 und 250 ppm, am bevorzugtesten zwischen 50 und 200 ppm.

4. Zusammensetzung nach einem der vorhergehenden Ansprüche, wobei die Menge an anorganischem Säurefänger in der Zusammensetzung zwischen 100 und 5000 ppm ist, bevorzugt zwischen 200 und 1000 ppm, bevorzugter zwischen 100 und 600 ppm.

5. Zusammensetzung nach einem der vorhergehenden Ansprüche, wobei die Gesamtmenge an Additiven in der Zusammensetzung höchstens 1000 ppm ist.

6. Zusammensetzung nach einem der vorhergehenden Ansprüche, ferner umfassend einen organischen Säurefänger, wobei bevorzugt der organische Säurefänger Calciumstearat, Zinkstearat oder Magnesiumstearat ist, bevorzugt Calciumstearat.

7. Zusammensetzung nach einem der vorhergehenden Ansprüche, wobei die Zusammensetzung keine phosphorhaltige Verbindung umfasst.

8. Zusammensetzung nach einem der vorhergehenden Ansprüche mit einem CIELAB-b-Wert von höchstens 5,0.

9. Zusammensetzung nach einem der vorhergehenden Ansprüche mit einem CIELAB-b-Wert von höchstens 4,0.

10. Zusammensetzung nach einem der vorhergehenden Ansprüche, wobei die Gew.-% basierend auf dem Propylenhomopolymer oder Propylen-Ethylen-Copolymer eine Isotaktizität von höchstens 98 Gew.-% hat, basierend auf dem Propylenhomopolymer oder Propylen-Ethylen-Copolymer, und/oder wobei Propylenhomopolymer oder Propylen-Ethylen-Copolymer eine Isotaktizität von mindestens 90 Gew.-% hat, basierend auf dem Propylenhomopolymer oder Propylen-Ethylen-Copolymer, wobei die Isotaktizität unter Verwendung von 13C NMR bestimmt wird.

11. Biaxial orientierter Polypropylen (BOPP) -film, umfassend die Zusammensetzung nach einem der Ansprüche 1-10.

12. Film nach Anspruch 11 mit einer Dicke von zwischen 5 und 500 Mikron.

13. Film nach Anspruch 12 mit einem Streckverhältnis von mindestens 3-mal in die Maschinenrichtung und mindestens 7-mal in die Querrichtung (3x7) in simultanem oder sequenziellem Modus.

14. Verfahren für die Herstellung eines biaxial orientierten Polypropylen (BOPP) -films nach einem der Ansprüche 11-13, umfassend die folgenden Schritte:
(a) Bereitstellen der Zusammensetzung nach einem der Ansprüche 1-10;
(b) Extrudieren der Zusammensetzung, die in Schritt a) bereitgestellt wird, in eine Folie;
(c) Strecken der Folie aus Schritt b) in eine Maschinenrichtung (MD) und eine Querrichtung (TD), um einen biaxial orientierten Polypropylenfilm zu erhalten.

15. Verwendung der Zusammensetzung nach einem der Ansprüche 1-10 für die Herstellung eines Artikels, bevorzugt eines BOPP-Films.

## Revendications

1. Composition comprenant:
a) un homopolymère de propylène ou un copolymère de propylène-éthylène ayant une teneur en éthylène d'au plus 4,0 % en poids, préférablement d'au plus 1,5 % en poids sur la base du poids du copolymère de propylène-éthylène, ledit homopolymère de propylène ou copolymère de propylène-éthylène ayant :
- un Mw/Mn dans la plage de 4,0 à 12, dans lequel Mw représente le poids moléculaire moyen en poids et Mn représente le poids moléculaire moyen en nombre et dans lequel Mw et Mn sont mesurés selon ASTM D6474-12 ;
- une XS dans la plage de 1,0 à 8,0% en poids, dans laquelle XS représente la quantité de substances solubles dans le xylène qui sont mesurées selon ASTM D 5492-10;
- un indice de fluidité à l'état fondu dans la plage de 1 à 10 dg/min tel que mesuré selon ISO1133-1 (2011) (2,16 kg/230 °C) ;
b) un premier additif, étant un ou plusieurs tocophérols selon la formule A ci-dessous : 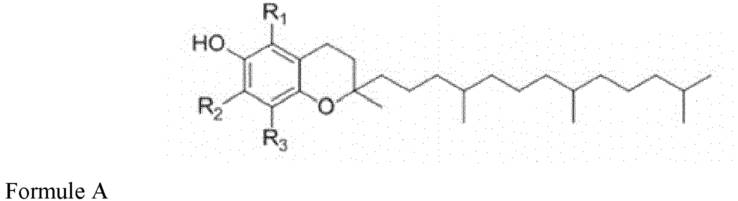
dans laquelle R₁, R₂ et R₃ sont chacun indépendamment soit un hydrogène (H) soit un méthyle (CH₃) ; et/ou
un ou plusieurs tocotriénols selon la formule B ci-dessous : 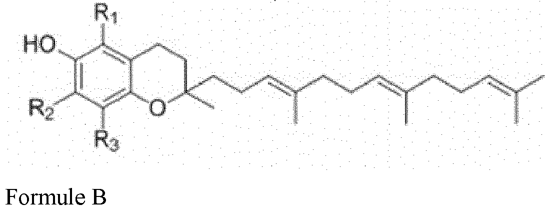
dans laquelle R₁, R₂ et R₃ sont chacun indépendamment soit un hydrogène (H) soit un méthyle (CH3) ; préférablement dans laquelle ledit premier additif est le D,L-α-tocophérol
c) un deuxième additif, étant un capteur d'acide inorganique, étant un oxyde métallique.

2. Composition selon la revendication 1, dans laquelle ledit capteur d'acide inorganique est l'oxyde de zinc.

3. Composition selon la revendication 1 ou 2, dans laquelle la quantité de premier additif dans la composition est comprise entre 25 et 2000 ppm, préférablement entre 50 et 1000 ppm, plus préférablement entre 50 et 500 ppm, encore plus préférablement entre 50 et 250 ppm, le plus préférablement entre 50 et 200 ppm.

4. Composition selon l'une quelconque des revendications précédentes, dans laquelle la quantité de capteur d'acide inorganique dans la composition est comprise entre 100 et 5000 ppm, préférablement entre 200 et 1000 ppm, plus préférablement entre 100 et 600 ppm.

5. Composition selon l'une quelconque des revendications précédentes, dans laquelle la quantité totale d'additifs dans la composition est d'au plus 1000 ppm.

6. Composition selon l'une quelconque des revendications précédentes, comprenant en outre un capteur d'acide organique, préférablement dans laquelle ledit capteur d'acide organique est le stéarate de calcium, le stéarate de zinc ou le stéarate de magnésium, préférablement le stéarate de calcium.

7. Composition selon l'une quelconque des revendications précédentes, dans laquelle la composition ne comprend pas de composé contenant du phosphore.

8. Composition selon l'une quelconque des revendications précédentes, ayant une valeur b CIELAB d'au plus 5,0.

9. Composition selon l'une quelconque des revendications précédentes, ayant une valeur b CIELAB d'au plus 4,0.

10. Composition selon l'une quelconque des revendications précédentes, dans laquelle l'homopolymère de propylène ou le copolymère de propylène-éthylène a une isotacticité d'au plus 98% en poids sur la base de l'homopolymère de propylène ou du copolymère de propylène-éthylène et/ou dans laquelle l'homopolymère de propylène ou le copolymère de propylène-éthylène a une isotacticité d'au moins 90% en poids sur la base de l'homopolymère de propylène ou du copolymère de propylène-éthylène, dans laquelle l'isotacticité est déterminée en utilisant la RMN du 13C.

11. Film de polypropylène orienté biaxialement (BOPP) comprenant la composition selon l'une quelconque des revendications 1 à 10.

12. Film selon la revendication 11, ayant une épaisseur comprise entre 5 et 500 microns.

13. Film selon la revendication 12, présentant un rapport d'étirage d'au moins 3 fois dans la direction machine et d'au moins 7 fois dans la direction transversale (3 x 7) en mode simultané ou séquentiel.

14. Procédé de préparation d'un film de polypropylène orienté biaxialement (BOPP) selon l'une quelconque des revendications 11 à 13, comprenant les étapes consistant à :
(a) fournir la composition selon l'une quelconque des revendications 1 à 10 ;
(b) extruder la composition fournie à l'étape a) en une feuille ;
(c) étirer la feuille de l'étape b) dans une direction machine (MD) et une direction transversale (TD) pour obtenir un film de polypropylène orienté biaxialement.

15. Utilisation de la composition selon l'une quelconque des revendications 1 à 10 pour la préparation d'un article, préférablement un film BOPP.
